Europäisches Patentamt

European Patent Office

Office européen des brevets

(11) Veröffentlichungsnummer: **0 440 062 A2**

## (12) EUROPÄISCHE PATENTANMELDUNG

(21) Anmeldenummer: **91100717.7**

(22) Anmeldetag: **22.01.91**

(51) Int. Cl.5: **H04Q 11/04, H04Q 3/62**

(30) Priorität: **01.02.90 DE 4002861**

(43) Veröffentlichungstag der Anmeldung:
**07.08.91 Patentblatt 91/32**

(84) Benannte Vertragsstaaten:
**AT BE CH DE DK ES FR GB IT LI NL SE**

(71) Anmelder: **Standard Elektrik Lorenz Aktiengesellschaft**
**Lorenzstrasse 10**
**W-7000 Stuttgart 30(DE)**

(72) Erfinder: **Fischer, Oliver**
**Rotstrasse 3**
**W-7252 Weil der Stadt 4(DE)**
Erfinder: **Linsenmaier, Guido**
**Wilhelmstrasse 37**
**W-7536 Ispringen(DE)**

(74) Vertreter: **Pohl, Heribert, Dipl.-Ing et al**
**Standard Elektrik Lorenz AG Patent- und**
**Lizenzwesen Postfach 30 09 29**
**W-7000 Stuttgart 30(DE)**

(54) **Verbindungszustandserkennung in einer Breitbandnebenstellenanlage.**

(57) In einer Breitbandnebenstellenanlage (BB-PABX), in der eine Vielzahl von Breitbandendgeräten (BB-E1, ..., BB-E26) zur Vermittlung von Video- und Datensignale an ein Breitbandkoppelfeld (BB-V) angeschlossen sind, muß der jeweilige Verbindungszustand der Anlage den Endgeräten signalisiert werden, damit eine Breitbandverbindung aktiviert werden kann.

Dazu wird ein einen Ruhezustand charakterisierende Nachricht auf einen Ein/Ausgang (O) des Breitbandkoppelfeldes (BB-V) der Breitbandnebenstellenanlage eingespeist und gesteuert durch eine zugeordnete Steuereinheit (C) werden alle nicht vermittelten Ein/Ausgänge (1, 2, ..., 30) des Breitbandkoppelfeldes mit dem ersten Ein/Ausgang (O) verbunden, so daß die Ruhezustandsnachricht immer an alle nicht vermittelten Endgeräte übertragen wird.

EP 0 440 062 A2

# VERBINDUNGSZUSTANDSERKENNUNG IN EINER BREITBANDNEBENSTELLENANLAGE

Die Erfindung betrifft eine Schaltungsanordnung zur Signalisierung eines Verbindungszustandes einer Breitbandnebenstellenanlage an eine Vielzahl von Breitbandendgeräte, die zur Vermittlung von Video- und Datensignalen an ein Breitbandkoppelfeld der Breitbandnebenstellenanlage angeschlossen sind.

Das öffentliche Vermittelnde Breitbandnetz (VBN) der Deutschen Bundespost ermöglicht eine übermittlung von Bild und Sprache in Fernsehqualität bei einer Datenrate von 140 MBit/s. Das VBN stellt ein Breitband-Selbstwählnetz für eine große Zahl von Breitbandendgeräte-Teilnehmern, wie Fernsehtelefone, Videokonferenzen, dar. Jeder Teilnehmer wird über eine die 140 MBit/s-Signale in Audio-, Video- und Datensignale wandelnde Teilnehmeranschlußeinheit TAE mit dem VBN verbunden. Die TAE enthält Funktionsmodule für die Steuerung, A/D-Wandler, Multiplexer/Demultiplexer und Leitungsendeinrichtungen, wobei die Steuerung der TAE für den Verbindungsaufbau zur Verfügung steht. Über einen solchen VBN-Anschluß kann auch eine Breitbannebenstellenanlage mit einer Vielzahl von Teilnehmern betrieben werden ("Selbst wählen statt Voranmeldung", von E. Fischer und P Pernsteiner, Funkschau 5/1989, Seiten 30 ff.).

Um eine breitbandige Verbindung mit Breitbandendgeräten einer Breitbandnebenstellenanlage herstellen zu können, besteht die Aufgabe gemäß der Erfindung darin, eine Schaltungsanordnung zur Signalisierung des Verbindungszustandes der Breitbannebenstellenanlage an die Breitbandendgeräte zu ermöglichen.

Diese Aufgabe wird erfindungsgemäß durch die technische Lehre des Hauptanspruches gelöst.

Durch das erfindungsgemäße Erzeugen einer einen Ruhezustand charakterisierenden Nachricht, die über einen ersten Eingang des Breitbandkoppelfeldes an alle nichtvermittelten Ein-/Ausgänge des Koppelfeldes und somit an alle nichtvermittelten Breitbandendgeräte übertragen wird, wird den Breitbandendgeräten der Zustand "Nicht vermittelt" signalisiert. Das Vorhandensein einer durchgeschalteten Breitbandverbindung wird durch das Fehlen dieser Nachricht in einfacher Weise erkannt.

Weitere vorteilhafte Ausgestaltungen des Gegenstandes der Erfindung sind den Unteransprüchen zu entnehmen.

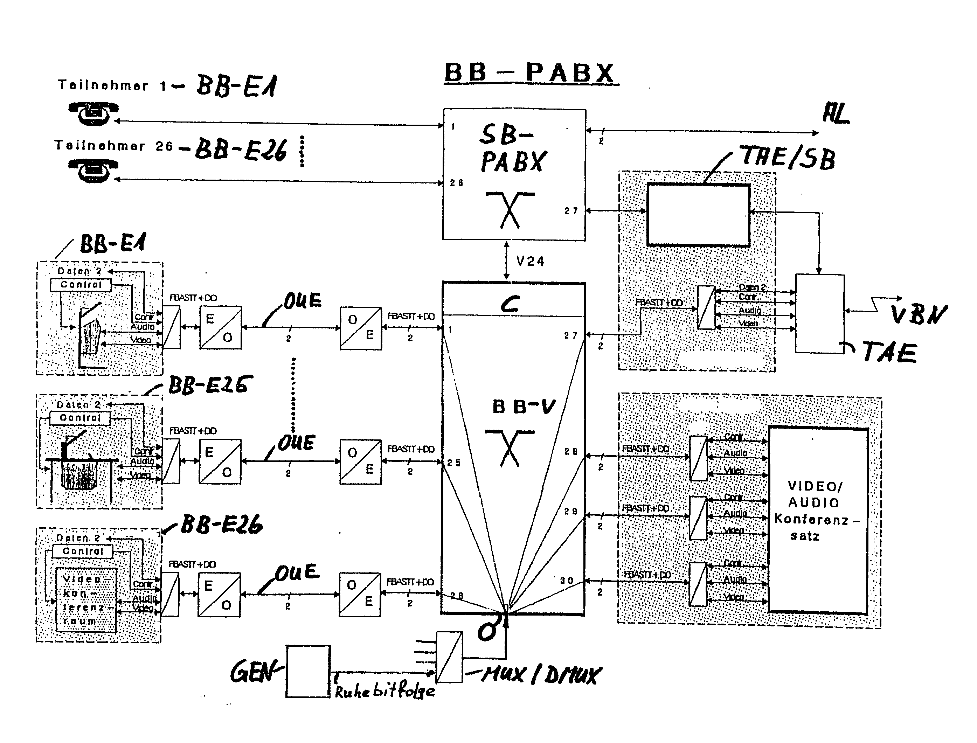

Ein Ausführungsbeispiel wird im folgenden anhand der Zeichnung erläutert.

Die Zeichnung zeigt ein Blockschaltbild einer die erfindungsgemäße Schaltungsanordnung enthaltenden Breitbandnebenstellenanlage.

Eine Breitbandnebenstellenanlage BB-PABX, wie in der Figur gezeigt, besteht aus einem analogen Breitbandkoppelfeld BB-V, dem eine Steuereinheit C zugeordnet ist. Das Breitbandkoppelfeld BB-V ist im wesentlichen eine im Raumvielfach aufgebaute Matrix, mit 32 Ein-/Ausgängen für die zu vermittelnden Breitbandsignale. Außer der zugeordneten Steuereinheit C sind Decoder zur Adressierung der Koppelpunkte, Speicher zum Halten der Einschalt- oder Ausschaltinformation und eine serielle Schnittstelle (V24) für Steuerdaten vorhanden.

Ein solches Breitbandkoppelfeld BB-V, wie im Ausführungsbeispiel angegeben, ist von der Firma SVT Video Systems, Ltd., Essex, England unter der Bezeichnung AVS 264 Video Matrix erhältlich.

An die mit 1 bis 26 bezeichneten Ein-/Ausgänge des Breitbandkoppelfeldes BB-V sind, wie in der Figur gezeigt, 26 mit BB-E1 bis BB-E26 bezeichnete Breitbandendgeräte über je eine optische übertragungsstrecke OUE, in die entsprechende elektro/optische E/O und optisch/elektrische Wandler O/E eingefügt sind, angeschlossen.

Das über das Breitbandkoppelfeld geschaltete Signal besteht aus einem Videosignal mit zwei Audiokanälen FBASTT und aus zwei Datenkanälen DD und wird zur weiteren Verarbeitung in jedem Endgerät BB-E1, ..., BB-E26 über entsprechende Multiplexer/Demultiplexer umgewandelt.

Die Breitbandendgeräte können z.B. Bildfernsprechgeräte, multifunktionale Videoarbeitsplätze oder auch ein Videokonferenzraum sein. Zur Herstellung von Videokonferenzverbindungen ist an die mit 28 bis 30 bezeichneten Ein-/Ausgänge des Breitbandkoppelfeldes BB-V entsprechend wie für die Breitbandendgeräte ein Videokonferenzsatz über Multiplexer/Demultiplexer angeschlossen.

Ein weiterer mit 27 bezeichneter Ein-/Ausgang des Breitbandkoppelfeldes BB-V ist über einen entsprechenden Multiplexer/Demultiplexer mit einer Teilnehmeranschlußeinheit TAE für ein vermittelndes Breitbandnetz VBN der Deutschen Bundespost verbunden, um externe Breitbandverbindungen herstellen zu können.

Ferner ist das Breitbandkoppelfeld BB-V über die serielle V-24-Schnittstelle mit einer schmalbandigen, d.h. mit einer Fernsprechnebenstellenanlage SB-PABX verbunden, da jeder Verbindungsaufbau zunächst in üblicher Weise über eine Fernsprechverbindung erfolgt. An die Fernsprechnebenstellenanlage SB-PABX sind somit ebenfalls die 26 Teilnehmer wie ganz "normale" schmalbandige Fernsprechteilnehmer angeschlossen, die einerseits in bekannter Weise über Amtsleitungen AL mit dem öffentlichen Fernsprechnetz verbindbar sind und die andererseits über einen weiteren mit 27 bezeichneten Anschluß und über eine geeignete Schnittstelle zur Signalisierungsanpassung TAE/SB mit der Teilnehmeranschlußeinheit TAE für das vermittelnde Breitbandnetz VBN verbindbar sind. Dabei haben nur die mit Breitbandendgeräten BB-E1, ..., BB-E26 ausgestatteten Teilnehmer die Berechtigung über das Breitbandnetz VBN Verbindungen aufzubauen.

Um nun eine interne oder externe Breitbandverbindung aufbauen zu können, wird in an sich bekannter Weise immer zuerst über die Fernsprechnebenstellenanlage SB-PABX eine schmalbandige Fernsprechverbindung hergestellt.

Um eine breitbandige Verbindung über das Breitbandkoppelfeld BB-V aktivieren zu können, muß das Breitbandendgerät den jeweiligen Verbindungszustand signalisiert bekommen, d.h. eine Mitteilung, daß eine Verbindung über das Breitbandkoppelfeld BB-V geschaltet ist (oder nicht). Dazu weist die erfindungsgemäße Schaltungsanordnung eine Einheit GEN auf, die eine einen Ruhezustand charakterisierende Nachricht erzeugt. Diese Einheit kann als Bitgenerator GEN ausgebildet sein, der eine beliebige fest vorgebbare Bitfolge erzeugt. Diese Bitfolge, im folgenden Ruhebitfolge genannt, kann z.B. ein einfacher ASCII-String sein. In vorteilhafter Weise ist der Bitgenerator GEN ein Teil der das Breitbandkoppelfeld BB-V steuernden Steuereinheit C.

Der Bitgenerator GEN ist über einen Datenkanal mit einem den Datenkanal, sowie einen Videokanal und einen zugehörigen Audiokanal umsetzenden Multiplexer/Demultiplexer verbunden, der an einem ersten Ein-/Ausgang O des Breitbandkoppelfeldes BB-V angeschlossen ist.

Erfindungsgemäß wird durch die Steuereinheit C, die alle Verbindungswünsche über die serielle Schnittstelle V24 mitgeteilt bekommt, der erste Ein-/Ausgang O mit allen nicht vermittelten Ein-/Ausgängen des Breitbandkoppelfeldes BB-V verbunden.

Dadurch wird die von dem Bitgenerator GEN über den Datenkanal eingespeiste Ruhebitfolge an alle nicht vermittelten Breitbandendgeräte übertragen. Dies ermöglicht erfindungsgemäß in dem Breitbandendgerät durch Detektieren des Zustandes Ruhebitfolge vorhanden Ja/Nein eine einfache Überwachung des Verbindungszustandes der Breitbandnebenstellenanlage.

Wird zum Aufbau einer Breitbandverbindung im Breitbandendgerät das Fehlen der Ruhebitfolge detektiert, was gleichbedeutend ist mit einer über das Breitbandkoppelfeld BB-V aufgebauten Verbindung zu dem gewünschten Breitbandteilnehmer, so kann der Teilnehmer durch Betätigen einer entsprechenden Taste des Breitbandendgerätes die Verbindung zum Senden/Empfangen eines Breitbandsignales, d.h. Bild- und Tonsignal in höchster Qualität, herstellen.

Anstelle einer von dem Bitgenerator GEN erzeugten Ruhebitfolge, wie in dem obigen Ausführungsbeispiel geschildert, sind auch beliebige andere Nachrichten, wie z.B. ein Ton- oder eine Videonachricht geeignet, einen Zustand "Nicht Vermittelt" zu signalisieren. Eine solche Tonnachricht oder Videonachricht kann in einfacher Weise mittels eines Tongenerators bzw. eines Videosignalgenerator erzeugt und entsprechend über den Multiplexer/Demultiplexer an den ersten Ein-/Ausgang O des Breitbandkoppelfeldes BB-V angelegt werden.

## Patentansprüche

1. Schaltungsanordnung zur Signalisierung eines Verbindungszustandes einer Breitbandnebenstellenanlage (BB-PABX) an eine Vielzahl von Breitbandendgeräte (BB-E1, ..., BB-E25, BB-E26), die zur Vermittlung von Video- und Datensignalen an ein Breitbandkoppelfeld (BB-V) der Nebenstellenanlage angeschlossen sind, **dadurch gekennzeichnet**, daß eine Einheit (GEN), die eine einen Ruhezustand charakterisierende Nachricht erzeugt, mit einem ersten Ein-/Ausgang (O) des Breitbandkoppelfeldes (BB-V) verbunden ist und daß alle nicht vermittelten Ein-/Ausgänge (1, 2, ..., 30) des Breitbandkoppelfeldes (BB-V), gesteuert durch eine mit dem Koppelfeld verbundene Steuereinheit (C), mit dem ersten Ein-/Ausgang (O) verbunden werden, so daß die einen Ruhezustand charakterisierende Nachricht an alle nicht vermittelten Breitbandendgeräte übertragen wird.

2. Schaltungsanordnung nach Anspruch 1, dadurch gekennzeichnet, daß die Einheit (GEN), die eine einen Ruhezustand charakterisierende Nachricht erzeugt, ein Bitgenerator (GEN) ist, der eine beliebige, fest vorgegebene Bitfolge, im folgenden Ruhebitfolge genannt, erzeugt.

3. Schaltungsanordnung nach Anspruch 2, dadurch gekennzeichnet, daß der Bitgenerator (GEN) ein Teil der Rechnereinheit (C) ist.

4. Schaltungsanordnung nach Anspruch 2 oder 3, dadurch gekennzeichnet, daß der Bitgenerator über einen Datenkanal und einen den Datenkanal sowie einen Audiokanal und einen Videokanal umsetzenden Multiplexer/Demultiplexer (MUX/DMUX) mit dem ersten Eingang (O) des Koppelfeldes (BB-V) verbunden ist.

5. Schaltungsanordnung nach Anspruch 1, dadurch gekennzeichnet, daß die einen Ruhezustand charakterisierende Einheit, ein Tongenerator oder ein Videosignalgenerator ist.